# FASCICULE DE BREVET EUROPEEN

(11) **EP 0 434 572 B1**
(45) Date de publication et mention de la délivrance du brevet: **05.04.1995**
(21) Numéro de dépôt: 90403732.2
(22) Date de dépôt: 21.12.1990
(51) Int. Cl.: A62D 5/00, G21F 3/02

(54) **Matériau pour la réalisation d'équipements de protection à l'encontre des agressions nucléaires, biologiques et chimiques**
Stoff für die Herstellung von gegen nukleare, biologische und chemische Angriffe schützenden Ausrüstungen
Material for the manufacture of protective equipment against nuclear, biological and chemical attacks

(30) Priorité: 22.12.1989 FR 8917065
(43) Date de publication de la demande: 26.06.1991
(73) Titulaire: MANUFACTURE DE VETEMENTS PAUL BOYE S.A., F-34202 Sète (FR); SOPLARIL S.A., F-92800 Puteaux (FR)
(72) Inventeur: Boyé, Philippe, F-34202 Sète (FR); Hervet, Daniel, F-62173 Rivière (FR)
(74) Mandataire: Cournarie, Michèle

(56) Documents cités:
- FR-A- 2 586 968
- US-A- 4 670 073
- US-A- 4 833 010

## Description

L'invention concerne un materiau pour la réalisation d'équipements de protection, notamment vetements, tentes, bàches, gaines...., a l'encontre des agressions nucleaires, biologiques et chimiques (NBC).

Les matériaux utilisés à cet egard sont constituès de plusieurs couches de matières plastiques différentes coextrudées ou contrecollées, associées à divers agents actifs contre les agressions biologiques et chimiques en particulier. On connait ainsi des matériaux a couche externe elastomere (caoutchouc butyle, néoprene, polyuréthane), a touche interne active (charbon actif à l'encontre des agressions biologiques et chimiques par exemple, plomb a l'encontre des rayonnements) et support de coton ou de polyamide (Nylon par exemple). Afin que l'équipement fabrique à partir du matériau soit parfaitement étanche, la liaison des différentes pièces entre elles est assuree par couture et soudage, ou directement par soudage.

Il serait avantageux de profiter des propriétes de bonne soudabilite des polyoléfines (par exemple polyéthylène), matiere plastique ayant par ailleurs de bonnes résistances mecanique et chimique mais les produits réalises jusqu'a présent avec des polyoléfines (par exemple polyethylene) n'ont pas donne entière satisfaction.

Or il a été trouve de façon surprenante qu'en interposant entre un substrat de non-tissé de polyoléfine (polyethylene, polypropylène,...) et une couche externe constituee d'une pellicule de polyoléfine (par exemple polyethyléne), une couche d'un matériau de protection choisi dans le groupe comprenant le EVOH (copolymère éthylène/acétate de vinyle hydrolysé, c'est-à-dire un alcool polyvinylique contenant 20 à 40% d'éthylène) et le poly(téréphtalate d'éthylène) enduit de poly(chlorure de vinylidène), on obtient un matériau ayant de remarquables propriétés de protection NBC.

L'invention fournit donc un matériau selon les revendications 1 et 4.

A titre d'exemple de polyoléfine, tant pour le non-tissé que pour la couche externe, on peut citer le polyéthylène et le polypropylene.

Lorsque la couche intermédiaire de matériau de protection est en EVOH, elle a une épaisseur d'au moins 6»m et peut aller jusqu'à 12»m. Une valeur inférieure à 6»m ne fournit pas des caractéristiques de protection suffisantes et une valeur superieure n'est pas interessante sur le plan economique. On utilise de préférence un EVOH à 30% d' ethylène.

Dans le cas ou la couche intermediaire de matériau de protection est en poly(terephtalate d'éthylène) (PET) enduit de poly(chlorure de vinylidène) (PVDC), on utilise une pellicule de PET d'au moins 12»m d'épaisseur sur laquelle est enduite une couche de PVDC d'au moins 3»m. Avantageusement la pellicule de PET est en PET bioriente.

Le substrat de non-tisse de polyoléfine peut avoir un grammage de 10 à 150 g/m². Il est essentiellement utilise pour constituer un support souple ayant une résistance mécanique suffisante pour pouvoir supporter les operations de contrecollage des couches complémentaires. Il permet aussi d'apporter a l'ensemble les caractéristiques optiques souhaitées (coloris..). Des non-tissés de polyoléfines sont disponibles sur le marché et on peut citer les produits vendus sous la denomination TYVEK® (E.I. Dupont de Nemours), en particulier la qualité TYVEK 1422 R.

La pellicule de polyoléfine externe a une épaisseur variant entre 20 et 100»m et elle est de préférence de 60 à 90»m, des valeurs supérieures n'améliorant les caracteristiques de protection et alourdissant de façon trop importante le materiau final. Celui-ci, en particulier lorsqu'il est destiné a la fabrication de vêtements, doit rester suffisamment souple pour permettre une grande liberté de mouvements à l'utilisateur.

On a constate que si la couche de EVOH adhére bien à la pellicule de polyoléfine à l'aide des colles habituelles, on n'arrive pas a obtenir une adhérence convenable de la couche de EVOH au non-tissé de polyoléfine. On résoud alors le problème en interposant entre la couche de EVOH et le non-tissé une pellicule de polyoléfine (polyethylène ou polypropylène par exemple) collée à la couche de EVOH par un liant similaire à celui précédemment utilisé. La deuxième pellicule de polyoléfine peut avoir une épaisseur très faible (une dizaine de »m) car son rôle essentiel est un rôle de liant mais il peut être avantageux de répartir l'épaisseur de polyoléfine (par exemple polyéthylène PE) de façon égale ou à peu près entre les deux couches.

Dans un tel cas, l'ensemble pellicule de PE / liant / couche de EVOH / liant / pellicule de PE peut être réalise par coextrusion, avec reglage possible des épaisseurs de manière classique. L'ensemble est ensuite contrecolle sur le non-tisse de polyoléfine.

Une telle structure peut egalement être réalisée par laminage de pellicules distinctes enduites sur la face appropriée de liants usuels.

Lorsqu'on utilise comme matériau de protection du poly(téréphtalate d'éthylène) enduit de PVDC, le produit est avantageusement réalise bar contrecollage des pellicules, la pellicule de PET étant préalablement anduite d'une couche de PVDC de l'épaisseur voulue du côté venant en contact avec la pellicule de PE.

### EXEMPLE 1.

On prépare par coextrusion un coextrudé cinq couches composé de
- une couche de polyéthylène d'environ 32 »m,
- une couche de liant de 5-6 »m,
- une couche de EVOH de 6 »m (valeur minimum)
- une couche de liant de 5-6 »m,
- une couche de polyéthylène d'environ 32 »m.

Après préparation, cet ensemble est contrecollé sur un non-tissé de polyethylène (TYVEK®1422R) en utilisant 3g/m² de colle. Le matériau obtenu a un grammage de 120 g/m² et confère une protection supérieure à 24 h pour une contamination de 10g/m² de produits chimiques agressifs concentres (acides, bases,...) et de gaz de combat de type ypérite ou organophosphoré.

### EXEMPLE 2

Sur une pellicule de polyéthylène d'une épaisseur de 80»m, on dépose une couche de liant (colle) à raison de 3g/m² et on y contrecolle une pellicule de PET biorienté d'une epaisseur de 12»m enduite d'une couche de PVDC de 3»m du côte de la pellicule de polyéthylène. Le tout est contrecolle (3g/m² de laint) sur un non-tissé de polyéthylène (TYVEK®1422R). Le matériau obtenu a un grammage de 150g/m² et confère une protection supérieure à 24 h pour une contamination de 10 g/m² de produits chimiques agressifs concentrés (acides, bases,...) et de gaz de combat de type yperite ou organophosphoré.

Il est entendu que les épaisseurs et grammages donnés dans les deux exemples, a l'exception des valeurs minimales pour l'épaisseur de la couche intermédiaire de matériau de protection, peuvent être modifiés et n'ont été indiques qu'a titre illustratif.

Le fait que les côtes endroit (couche externe) et envers (non tisse) du materiau soient tous deux en polyoléfine (et generalement en la meme polyolefine) présentant une bonne soudabilité sur elle-même permet de réaliser tous les types de soudure : envers sur envers, endroit sur endroit et envers sur endroit, ce qui est particulièrement avantageux pour la réalisation de vêtements.

## Revendications

1. Matériau pour la réalisation d'équipements de protection à l'encontre des agressions nucléaires, biologiques et chimiques, caractérisé en ce qu'il comprend
- un substrat en non-tissé de polyoléfine,
- une couche externe constituée d'une pellicule de polyoléfine,
- une couche intermédiaire d'un matériau de protection qui est le poly(téréphtalate d'éthylène) enduit de poly(chlorure de vinylidène),
les différentes couches étant liées entre elles à l'aide de liants appropriés

2. Matériau selon la revendication 1, caractérisé en ce que ladite couche intermédiaire de matériau de protection est une pellicule de poly(téréphtalate d'éthylène) d'une épaisseur d'au moins 12 »m comportant une couche de poly(chlorure de vinylidène) d'au moins 3 »m.

3. Matériau selon la revendication 2, caractérisé en ce qu'il est obtenu par laminage des trois couches en présence de liants appropriés disposés entre les couches.

4. Matériau pour la réalisation d'équipements de protection à l'encontre des agressions nucléaires, biologiques et chimiques, caractérisé en ce qu'il comprend
- un substrat en non-tissé de polyoléfine,
- une couche externe constituée d'une pellicule de polyoléfine,
- une souche intermédiaire d'un matériau de protection qui est le copolymère éthylène-acétate de vinyle hydrolysé à 20 - 40% d'éthylène (EVOH)
- une couche supplémentaire en polyoléfine entre la couche en EVOH et le substrat en non-tissé, les différentes couches étant liées entre elles à l'aide de liants appropriés.

5. Matériau selon la revendication 4, caractérisé en en que ladite couche intermédiaire en EVOH a une épaisseur d'au moins 6 »m.

6. Matériau selon la revendication 5, caractérisé en ce qu'il comprend
a) une couche de polyoléfine de 20 à 100 »m,
b) une couche de liant approprié,
c) une couche de EVOH d'au moins 6 »m d'épaisseur,
d) une couche de liant approprié,
e) une couche de polyoléfine d'au moins une dizaine de »m,
f) un substrat en non-tissé de polyoléfine.

7. Matériau selon la revendication 6, caractérisé en ce que les couches de polyoléfine et le non-tissé sont en polyéthylène.

8. Matériau selon la revendication 6 ou 7, caractérisé en se qu'il est obtenu par co-extrusion des souches a à e et contrecollage de l'ensemble sur la couche f.

9. Equipement de protection à l'encontre des agressions nucléaires, biologiques et chimiques, obtenu à partir d'un matériau selon l'une quelconque des revendications 1 à 8.

## Claims

1. A material for manufacturing protective equipment against nuclear, biological and chemical attacks, characterized that it includes
- a non-woven polyolefin substrate,
- an outer layer made of a polyolefin film,
- an intermediate layer of a protective material which is polyethylene terephtalate coated with polyvinylidene chloride,
the different layers being binded together by using suitable binders.

2. A material as claimed in claim 1, characterized in that said intermediate layer of protective material consists in a polyethylene terephthalate film having a thickness of at least 12»m with a polyvinylidene chloride layer of at least 3»m thick.

3. A material according to claim 2, characterized in that it is obtained by laminating the three layers in the presence of appropriate binders between the layers.

4. A material for manufacturing protective equipment against nuclear, biological and chemical attacks, characterized in that it includes
- a non-woven polyolefin substrate,
- an outer layer made of a polyolefin film,
- an intermediate layer of a protective material which is ethylene/hydrolyzed vinyl acetate (with 20-40% ethylene) copolymer (EVOH),
- an extra polyolefin layer between the EVOH layer and the non-woven substrate, the different layers being binded together by using suitable binders.

5. A material as claimed in claim 1, characterized in that said intermediate layer is made of EVOH and has a thickness of at least 6»m.

6. A material as claimed in claim 5, characterized in that it comprises
a) a layer of a polyolefin film having a thickness of 20 to 100»m,
b) a layer of a suitable binder,
c) an EVOH layer having a thickness of at least 6»m,
d) a layer of a suitable binder,
e) a layer of polyolefin film having a thickness of 20 to 100»m,
f) a polyolefin non-woven substrate.

7. A material as claimed in claim 6, characterized in that the polyolefin films and the non-woven substrate are made of polyethylene.

8. A material as claimed in claim 6 or 7, characterized in that it is obtained through co-extrusion of layers a to e and lamination of the whole to the layer f.

9. A protective equipment against nuclear, biological and chemical attacks, obtained from a material according to any one of claims 1 to 8.

## Patentansprüche

1. Material zur Herstellung von Schutzeinrichtungen gegen nukleare, biologische und chemische Angriffe, dadurch **gekennzeichnet**, daß es aufweist:
- ein Substrat aus Nichtwebstoff aus Polyolefin,
- eine von einer Polyolefinfolie gebildete Außenschicht,
- eine Zwischenschicht aus einem Schutzmaterial, welches ein mit Polyvinylidenchlorid beschichtetes Polyethylenterephthalat ist, wobei die verschiedenen Schichten mittels geeigneter Bindemittel miteinander verbunden sind.

2. Material nach Anspruch 1, dadurch **gekennzeichnet**, daß die Zwischenschicht aus einem Schutzmaterial aus einer Polyethylenterephthalatfolie mit einer Dicke von mindestens 12 »m gebildet wird und eine Polyvinylidenchloridschicht von mindestens 3 »m enthält.

3. Material nach Anspruch 2, dadurch **gekennzeichnet**, daß es durch Laminieren von drei Schichten in Anwesenheit von geeigneten Bindemitteln, die zwischen den Schichten angeordnet sind, erhalten wird.

4. Material zur Herstellung von Schutzeinrichtungen gegen nukleare, biologische und chemische Angriffe, dadurch **gekennzeichnet**, daß es aufweist:
- ein Substrat aus Nichtwebstoff aus Polyolefin,
- eine von einer Polyolefinfolie gebildete Außenschicht,
- eine Zwischenschicht aus einem Schutzmaterial, welches ein hydrolysiertes Ethylen-Vinylacetat-Copolymer (EVOH) mit 20-40% Ethylen ist,
- eine zusätzliche Schicht aus Polyolefin zwischen der Schicht aus EVOH und dem Substrat aus Nichtwebstoff, wobei die verschiedenen Schichten mittels geeigneter Bindemittel miteinander verbunden sind.

5. Material nach Anspruch 4, dadurch **gekennzeichnet**, daß die Zwischenschicht aus EVOH eine Dicke von mindstens 6»m hat.

6. Material nach Anspruch 5, dadurch **gekennzeichnet**, daß es aufweist:
a) eine Polyolefinschicht von 20-100 »m,
b) eine geeignete Bindemittelschicht,
c) eine EVOH-Schicht mit einer Dicke von mindestens 6 »m,
d) eine geeignete Bindemittelschicht,
e) eine Polyolefinschicht mit einer Dicke, die ein Mehrfaches von 10 »m ist.
f) ein Substrat aus Nichtwebstoff aus Polyolefin.

7. Material nach Anspruch 6, dadurch **gekennzeichnet**, daß die Polyolefinschichten und der Nichtwebstoff aus Polyethylen sind.

8. Material nach Anspruch 6 oder 7, dadurch **gekennzeichnet**, daß es erhalten wird durch Koextrudieren der Schichten a) bis e) und Aufkaschieren dieser Gesamtheit auf die Schicht f).

9. Schutzeinrichtung gegen nukleare, biologische und chemische Angriffe, die aufgrund eines Materials nach einem der Ansprüche 1 bis 8 erhalten wird.
